# FASCICULE DE BREVET EUROPEEN

(11) **EP 0 642 399 B1**
(45) Date de publication et mention de la délivrance du brevet: **05.08.1998**
(21) Numéro de dépôt: 93910146.5
(22) Date de dépôt: 21.05.1993
(51) Int. Cl.: B24B 9/14, B24B 53/14, B23Q 41/00, G05B 19/12, B24B 49/18

(54) **PROCEDE DE RAVIVAGE DE MEULES, DISQUE ET MACHINE POUR SA MISE EN UVRE**
SCHLEIFSCHEIBEN ABRICHTVERFAHREN UND VORRICHTUNG ZUR ANWENDUNG DESSELBEN
METHOD OF RENEWING GRINDING WHEEL SURFACES AND DISK AND MACHINE FOR CARRYING OUT SAID METHOD

(30) Priorité: 26.05.1992 FR 9206413
(43) Date de publication de la demande: 15.03.1995
(73) Titulaire: ESSILOR INTERNATIONAL, F-94028 Créteil Cédex (FR)
(72) Inventeur: DELATTRE, Luc, F-60700 Pont-Saint-Maxence (FR); DABOUDET, Pascal, F-95570 Bouffemont (FR); LABAT, Jean-Luc, F-55500 Ligny-en-Barrois (FR)
(74) Mandataire: Hirsch, Marc-Roger
(86) Numéro de dépôt international: FR9300497
(87) Numéro de publication internationale: WO9324274

(56) Documents cités:
- EP-A- 0 225 077
- EP-A- 0 300 317
- WO-A-89/05711
- DE-A- 3 419 632
- DE-A- 3 518 902
- DE-A- 4 012 658

## Description

La présente invention a pour objet un procédé de ravivage de meules. Elle est particulièrement adaptée au ravivage des meules de machines à meuler utilisées dans le domaine ophtalmique qui comprennent une ou plusieurs meules diamantées, des moyens de préhension susceptibles de recevoir une lentille ophtalmique, ainsi que des moyens de commande. L'invention a aussi pour objet un disque et une machine pour la mise en oeuvre de ce procédé.

On utilise dans le domaine ophtalmique des machines à meuler pour détourer, biseauter ou rainurer des lentilles ophtalmiques.

L'opération de détourage est l'opération qui permet d'adapter le contour d'une lentille ophtalmique, qui est généralement circulaire, au contour de la monture destinée à la recevoir. Elle consiste donc à supprimer certaines parties de la périphérie de la lentille.

L'opération de biseautage d'une lentille ophtalmique, qui est mise en oeuvre après le détourage, permet d'adapter la section du bord périphérique de la lentille, pour qu'elle puisse s'engager dans la rainure que comporte habituellement une monture de lunette. Le biseautage d'une lentille consiste donc à ménager sur le bord périphérique de la lentille une nervure ou un biseau, qui présente en général une forme triangulaire.

L'opération de rainurage d'une lentille ophtalmique est aussi mise en oeuvre après le détourage de la lentille. Elle permet d'adapter la section du bord périphérique de la lentille pour que celle-ci puisse être montée dans certains types de montures. En effet, certaines montures ne présentent pas une rainure sur tout le périmètre intérieur de la monture; il arrive au contraire par exemple que la monture ne corresponde qu'à la partie supérieure de la lentille et que la partie inférieure de la lentille ne soit retenue que par un fil transparent. Dans un tel cas, il est nécessaire de ménager une rainure ou gorge, le plus souvent triangulaire ou semi-circulaire sur le bord périphérique de la lentille.

Le plus souvent, ces trois opérations sont conduites sur une même machine à meuler qui est équipée d'un train de meules. De telles machines sont connues et disponibles sur le marché.

Ces machines à meuler comprennent typiquement une ou plusieurs meules diamantées, souvent accolées pour constituer un train de meules, des moyens de préhension susceptibles de recevoir la lentille ophtalmique à traiter, et des moyens de commande. Les moyens de commande sont susceptibles de commander la rotation des meules et des moyens de préhension qui maintiennent la lentille; les moyens de commande commandent de plus le déplacement relatif de la lentille et des meules.

Une telle machine à meuler comporte généralement un doigt palpeur qui permet de suivre un gabarit de la forme désirée de la lentille. Elle peut aussi, le cas échéant, comprendre dans une mémoire les différentes formes désirées que peut prendre la lentille; et, dans ce cas, le doigt palpeur suit le plus souvent le contour d'un disque.

Le fonctionnement général d'une telle machine à meuler est le suivant: dans un premier temps, une meule de détourage assure le détourage de la lentille à traiter, puis une meule de biseautage ou de rainurage assure ensuite le biseautage ou le rainurage de la lentille détourée.

Une telle machine et son fonctionnement sont plus particulièrement décrits dans le brevet français publié sous le numéro 2543039, au nom de la demanderesse.

Les machines à meuler connues, et plus particulièrement celle décrite dans ce brevet, ont un fonctionnement très satisfaisant. Elles ne permettent toutefois pas de résoudre de façon satisfaisante le problème de l'usure des meules.

On utilise en effet sur les machines à meuler des meules diamantées. Celles-ci sont généralement constituées d'un disque couvert à sa périphérie d'une couche diamantée, formée d'un liant et de grains de diamant. Les couches diamantées peuvent être produites par électro-déposition ou par frittage. Bien entendu, au cours des usinages successifs des lentilles dans les machines à meuler, ces meules perdent progressivement leur agressivité et leur pouvoir d'abrasion. Cette perte provient du fait que les grains de diamant qui se trouvent en contact avec les lentilles à usiner s'émoussent progressivement. Il est bien évident que si l'on a décrit ce phénomène pour une meule diamantée, il se produirait tout autant pour n'importe quel type de meule.

Cette usure de la meule peut dans certaines conditions être compensée par l'auto-ravivage de la meule sur le verre à usiner. En effet, lors de l'usinage, la lentille ophtalmique qui est meulée a une action d'usure de la meule, qui conduit à un certain ravivage de celle-ci. Toutefois, cet auto-ravivage ne présente pas une solution satisfaisante au problème de l'usure des meules. D'une part, les lentilles ophtalmiques sont maintenant constituées de verres très différents, présentant des duretés diverses, qui conduisent à un mauvais auto-ravivage. En particulier, certaines lentilles en composite verre-plastique, lors de leur meulage, déposent sur la meule une pellicule qui empêche ou ralentit l'auto-ravivage. D'autre part, l'auto-ravivage implique généralement des modifications préjudiciables de la forme de la surface de la meule. En effet, l'auto-ravivage n'use pas la meule régulièrement et, si par exemple l'auto-ravivage se produit avec une série de lentilles particulières, la forme de la meule sera sans doute modifiée en fonction de celle de ces lentilles. Un usinage ultérieur risque donc d'abîmer des lentilles de forme différente. Le problème est évidement crucial pour les meules de rainurage et de biseautage.

Il a donc été proposé un ravivage manuel des meules. Lorsque l'opérateur estime que la meule est usée, il utilise un bâton parallélépipédique d'alumine, de carborundum ou d'un matériau d'une dureté analogue, qu'il passe manuellement sur la meule pour la raviver. Cette procédure présente de nombreux inconvénients.

D'une part, elle conduit à une usure prématurée de la couche diamantée lorsque les opérations de ravivage sont répétées fréquemment, ou lorsque l'opérateur agit de façon trop brutale. Même si la meule fonctionne encore, l'opérateur peut juger que le travail n'est pas assez rapide et décider de raviver trop tôt la meule. Ceci, compte tenu du prix élevé des meules, est un inconvénient majeur.

D'autre part, cette procédure manuelle, malgré toute l'expérience de l'opérateur, conduit à des déformations du profil de la meule. Dans le cas d'une meule de détourage, à section périphérique plane, il est nécessaire que le bâton d'alumine ou de carborundum soit maintenu parfaitement parallèle au bord de la meule, afin d'éviter de déformer le profil. Cette opération est assez difficile à réaliser de façon satisfaisante. Dans le cas d'une meule de biseautage ou de rainurage, qui présente un profil en creux ou une excroissance, le ravivage manuel à l'aide d'un bâton d'alumine ou de carborundum déforme considérablement le profil d'usinage de la meule. De ce fait, elle n'a plus, après le ravivage, la forme nécessaire à un usinage pleinement satisfaisant.

La demande de brevet DE-A-4 012 658 propose un système de rectification d'une meule, qui s'applique à une machine à meuler les lentilles ophtalmiques. Ce document propose une taille, une égalisation ou une correction du profil de la meule, à l'aide d'un outil qui doit être plus dur que la matière de la meule. Selon ce document, on rectifie la meule au moyen d'un outil que l'on dispose entre les broches, à l'emplacement prévu pour la lentille.

EP-A-0 451 572 décrit un disque destiné à la rectification d'une meule présentant au cours du temps un pouvoir d'attaque croissant. Ceci provoque une diminution du temps d'usinage, qui est détectée pour indiquer que la meule doit être rectifiée.

La présente invention propose un procédé de ravivage de meules qui pallie ces inconvénients de l'art antérieur. Elle propose aussi une machine à meuler pour la mise en oeuvre du procédé.

Le ravivage des meules grâce à la présente invention est rapide et fiable. Il permet de bien garder les profils d'usinage des meules, et donc d'obtenir des outils toujours aussi performants.

Il évite aussi une usure prématurée des meules en permettant un contrôle précis du degré d'usure des meules.

Il permet enfin un ravivage adapté aux différents matériaux qui peuvent composer les meules.

La présente invention a pour objet un procédé de ravivage de meules selon la revendication 1.

Selon un mode de mise en oeuvre, le procédé comprend en outre une étape de détection automatique de la présence et de la nature des disques disposés dans lesdits moyens de préhension.

Selon un autre mode de mise en oeuvre, l'étape de détection de l'usure de la meule consiste à mesurer le temps d'usinage d'une lentille ophtalmique.

Selon encore un mode de mise en oeuvre, l'étape de détection de l'usure de la meule consiste à mesurer la puissance consommée par des moyens d'entraînement en rotation de la ou des meules diamantées et/ou des moyens d'entraînement en rotation des moyens de préhension.

Selon encore un autre mode de mise en oeuvre du procédé, au moins la surface périphérique du disques est constituée d'un matériau abrasif et présente en son centre des moyens d'accouplement aux moyens de préhension de ladite machine.

De préférence, le disque comporte en outre sur sa partie centrale des moyens d'identification constitués par exemple d'une pluralité de trous. Le matériau abrasif est avantageusement constitué d'alumine ou de carborundum.

L'invention concerne en outre une machine à meuler les lentilles ophtalmiques permettant la mise en oeuvre du procédé (voir la revendication 8).

Selon un mode de réalisation de l'invention, la machine à meuler comporte en outre des moyens de détection de la présence éventuelle et de la nature d'un disque de ravivage desdites meules disposé dans lesdits moyens de préhension à la place de ladite lentille.

Selon un autre mode de réalisation de l'invention, les moyens de détection sont constitués par une cellule photo-électrique et une source de lumière.

Les caractéristiques et avantages de la présente invention ressortiront mieux de la description suivante, donnée à titre d'exemple et en référence aux figures annexées, où:
- - la figure 1: représente schématiquement une machine à meuler les lentilles;
- - la figure 2: montre un disque;
- - la figure 3: montre, à plus grande échelle, un détail du profil d'un disque;
- - la figure 4: représente un ordinogramme d'un programme de ravivage automatique.

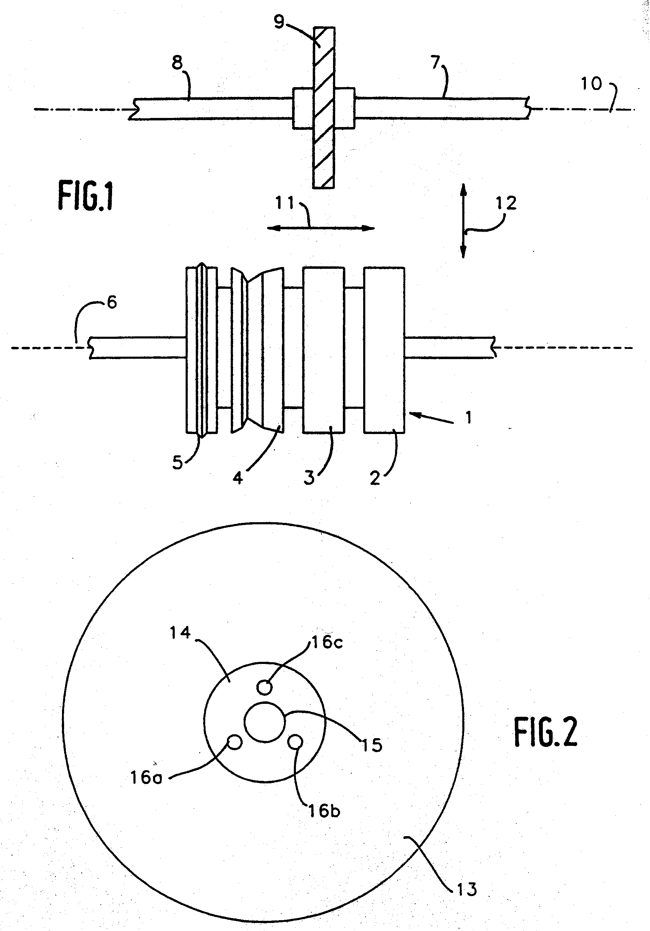

La figure 1 représente schématiquement une machine à meuler les lentilles; ne sont représentées à la figure 1 que les parties intéressant directement la présente invention. Une telle machine comprend de façon connue en soi un ensemble de meules diamantées, des moyens de préhension susceptibles de recevoir une lentille ophtalmique ainsi que des moyens de commande pour contrôler la rotation et la position relative desdites meules et de ladite lentille. On n'a représenté sur la figure 1 qu'un train de meules 1, constitué à titre d'exemple de quatre meules accolées, à savoir: une meule d'ébauche 2 pour verres organiques, une meule d'ébauche 3 pour verres minéraux, une meule à gorge 4 pour la finition et le biseautage ainsi qu'une meule à nervure 5 pour la finition et le rainurage. Ce train de meules 1 est susceptible de tourner autour d'un axe 6, en entraînement par un moteur non représenté qui est commandé par les moyens de commande. La machine comprend en outre des moyens de préhension, constitués dans l'exemple de la figure 1 de deux broches de support 7 et 8, susceptibles d'enserrer une lentille; sur la figure 1, on a représenté la situation dans laquelle un disque 9 selon l'invention était disposé dans les moyens de préhension 7, 8, à la place d'une lentille. L'ensemble constitué par les moyens de préhension 7, 8 et la lentille ou le disque 9 qui y est disposé est susceptible de tourner autour de l'axe 10, en entraînement par un moteur non représenté qui est commandé par les moyens de commande. Les moyens de commande contrôlent donc la rotation du train de meules 1 autour de l'axe 6, et la rotation de l'ensemble constitué par les moyens de préhension 7, 8 et le disque 9 autour de l'axe 10. Les moyens de commande contrôlent en outre le déplacement relatif du train de meules 1 et de cet ensemble 7, 8, 9 dans la direction des axes 6 et 10, comme symbolisé par la flèche 11 sur la figure 1, et dans la direction perpendiculaire aux axes 6 et 10, comme symbolisé sur la figure 1 par la flèche 12. On a représenté sur la figure 1 un disque 9 à section périphérique plane, adapté au ravivage des meules cylindriques, telles que les meules d'ébauche 2 ou 3.

Le procédé consiste à disposer, dans les moyens de préhension 7, 8, un disque 9 de matière abrasive, puis à raviver la meule grâce audit disque. Pour le ravivage, le disque 9 et le train de meules sont entraînés en rotation et les moyens de commande assurent le positionnement du disque 9 face à la meule à raviver, par déplacement relatif, dans la direction des axes symbolisée par la flèche 11. Ensuite, les moyens de commande assurent le déplacement relatif du disque 9 et de la meule, de façon à ce qu'ils rentrent en contact pendant le temps nécessaire au ravivage de la meule. Bien entendu, ce temps peut dépendre de la composition de la meule à raviver, comme de la dureté du disque abrasif 9. Selon l'invention, le ravivage est mis en oeuvre après détection de l'usure de la meule, comme expliqué plus en détail dans la suite.

Les moyens de commande ne sont pas représentés sur la figure 1 du fait que leur fonctionnement précis n'est pas utile à la bonne intelligence de l'invention. De façon classique, ils peuvent comprendre un dispositif de doigt palpeur muni d'une touche, ou tout autre dispositif de mesure approprié. Les moyens de commande peuvent comprendre un programme spécifique qui assure un bon ravivage, et qui est par exemple stocké dans la machine sur un support tel qu'une mémoire programmable type EPROM. En fait, l'invention peut être adaptée à tout type de machine à meuler automatique, présentant des moyens de commande ou des moyens de préhension très divers.

La figure 2 montre un disque. Un tel disque a une partie périphérique 13 constituée en un matériau abrasif. Dans le cas de meules diamantées, ce peut par exemple être de l'alumine ou du carborundum. Le disque de la figure 2 présente dans sa partie centrale 14 des moyens 15 d'accouplement aux moyens de préhension de la machine à meuler dans laquelle il doit être utilisé. Dans le cas de la figure 2, les moyens d'accouplement 15 correspondent à la structure des broches 7, 8, de sorte que le disque 9 soit adapté à être maintenu et entraîné en rotation par les moyens de préhension de la machine à meuler. Le disque de la figure 2 présente en outre dans sa partie centrale 14 des moyens d'identification constitués d'une pluralité de trous 16a, 16b et 16c, qui permettent l'identification des différents disques. En effet, comme on l'a vu plus haut, les machines à meuler présentent le plus souvent un train de meules de dureté ou de profil différents, et il est nécessaire d'utiliser pour le ravivage de ces diverses meules des disques de composition ou de profil différents. Les moyens d'identification permettent de reconnaître les différents disques.

Dans le mode de réalisation de la figure 2, les moyens d'identification sont constitués de trous 16a, 16b, 16c ménagés dans la partie centrale du disque, sur un même cercle concentrique au disque. L'identification du disque est obtenu par comptage du nombre de trous. Ce comptage peut être effectué par l'opérateur, à supposer qu'il ne dispose pas d'autres moyens d'identification tels que, par exemple, étiquettes, couleur de la meule, etc. Le comptage peut aussi être effectué par la machine à meuler, grâce à des moyens de détection de la présence et de la nature d'un disque. Dans le cas de la figure 2, le disque comprend comme moyens d'identification des trous 16a, 16b et 16c et les moyens de détection de la machine à meuler sont avantageusement constitués d'une source de lumière, disposée sur le bâti de la machine et d'une cellule photoélectrique disposée en face de cette source. La source de lumière et la cellule photoélectrique sont disposées de telle sorte que, lorsqu'un disque est placé dans la machine à meuler, la source de lumière et la cellule photo-électrique soient placées de part et d'autre du disque, et que les rayons issus de la source lumineuse arrivent sur la cellule photoélectrique après avoir traversé un des trous 16a, 16b, 16c. Grâce à une telle source et à une telle cellule, il est possible, quand le disque est entraîné en rotation, de compter le nombre d'éclats lumineux parvenant sur la cellule photoélectrique, ce qui permet le comptage du nombre de trous présents dans le disque. Avantageusement, la source est une source de lumière infrarouge et la cellule est adaptée à détecter les infrarouges de sorte à éviter les détections parasites du fait de la lumière ambiante. Bien entendu, la source et la cellule ne constituent qu'un exemple de réalisation des moyens de détection que peut présenter la machine. Leur fonction peut être assurée par d'autres moyens.

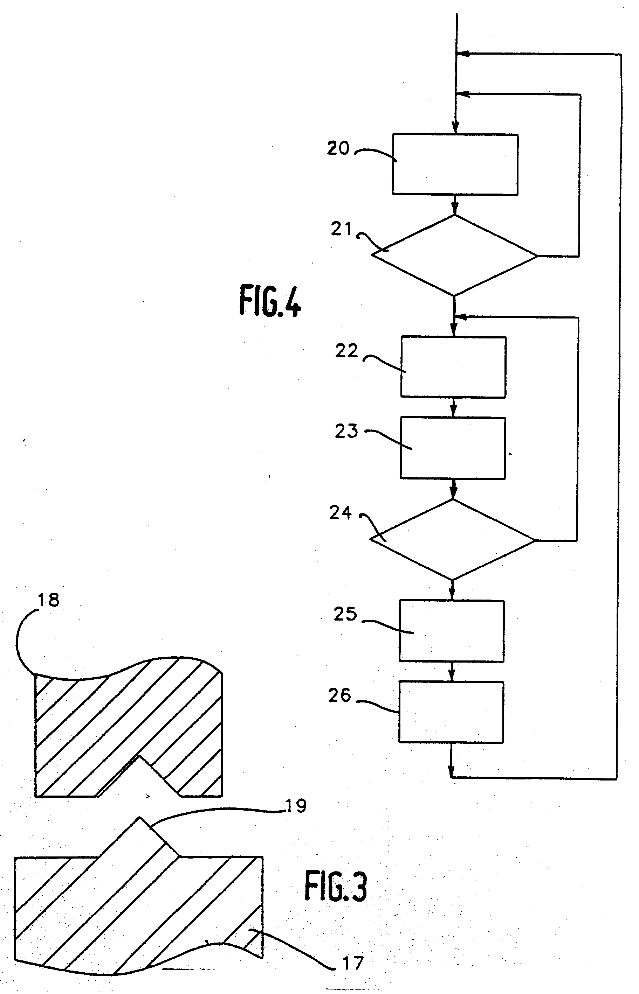

La figure 3 montre à plus grande échelle un détail du profil d'un disque et d'une meule de formage telle que, par exemple, la meule 5 de la figure 1. On a représenté à la figure 3 une coupe de la section périphérique d'une meule 17, destinée à assurer le rainurage des verres, et une coupe de la section périphérique d'un disque 18, pour le ravivage selon l'invention de cette meule. La meule 17 présente une nervure triangulaire 19, destinée à former dans les verres une rainure. Le profil du disque 18 peut quant à lui être obtenu à partir d'un disque à surface périphérique plane, après une première opération de ravivage d'une meule, telle que la meule 17, à profil non déformé. Le profil de la meule 17, et en particulier la forme de la nervure 19, sont préservés lors du ravivage par le disque 18; celui-ci fournit de plus, après le ravivage, un relevé du profil de la meule, qui est ainsi obtenu avec une grande précision, et sans nécessiter de démontage de la meule. Ce relevé permet à l'opticien de constater la présence de défauts sur la meule, par comparaison avec le profil théorique à obtenir.

La figure 4 montre un ordinogramme illustrant les étapes du procédé de ravivage selon l'invention. L'ordinogramme de la figure 4 n'est bien sûr qu'un exemple permettant de bien comprendre l'utilisation possible des divers éléments de l'invention.

La machine selon l'invention comprend des moyens de détection de l'usure d'une meule. Un exemple de réalisation desdits moyens est détaillé en référence aux deux premières étapes de l'ordinogramme de la figure 4.

A l'étape 20, la machine mesure le temps nécessaire pour l'usinage du verre. Il est possible de mesurer le temps total, nécessaire pour le détourage et le rainurage/biseautage, ou de mesurer chacune de ces durées indépendamment. Cette durée est mesurée soit grâce à l'horloge interne du microprocesseur, soit grâce à une horloge externe, lue par le microprocesseur. Cette horloge externe peut par exemple être constituée d'une horloge à quartz.

A l'étape 21, la durée mesurée est comparée à une valeur de consigne qui correspond à une valeur moyenne de temps d'usinage, pour une meule usée. Si la durée mesurée est inférieure à la valeur de consigne, il n'y a pas lieu de raviver la meule et la machine est disponible pour l'usinage suivant. Si, au contraire, la durée mesurée est supérieure à la valeur de consigne, la meule met un temps anormalement long à usiner le verre et on peut considérer qu'elle est usée. On passe alors au ravivage, qui commence à l'étape 22. Sinon, on repasse à l'étape 20.

A l'étape 22, la machine à meuler affiche un message indiquant la nécessité de ravivage, par exemple par clignotement d'un voyant lumineux, ou affichage sur un écran à cristaux liquides, ou tout autre méthode.

A l'étape 23, qui suit, la machine, grâce aux moyens de détection qu'elle comporte, et à l'aide des moyens d'identification du disque de ravivage, détecte la présence et la nature du disque disposé dans les moyens de préhension.

A l'étape 24, on détermine si le disque disposé dans les moyens de préhension est celui qui convient. Si ce n'est pas le cas, on repasse à l'étape 22. Si c'est le cas, on passe à l'étape 25.

A l'étape 25, le disque est positionné en face de la meule à raviver, par déplacement parallèlement à l'axe des meules, comme symbolisé par la flèche 11 de la figure 1.

A l'étape suivante 26, la meule et le disque sont entraînés en rotation et viennent en contact, pendant la durée nécessaire au ravivage. De nouveau, cette durée dépend du type de meule, ainsi que de la nature du disque et de son usure éventuelle.

Le programme revient ensuite après le ravivage de la meule à son point de départ, la machine étant prête pour une nouvelle utilisation.

Le programme dont l'ordinogramme est représenté à la figure 4 est bien sûr susceptible d'être modifié; ainsi, on pourrait prévoir des ravivages simultanés de certaines meules, ou toute autre variante.

La détection de l'usure de la meule selon l'invention peut se faire par d'autres mesures que la mesure du temps d'usinage d'une lentille, décrit ci-dessus en référence à la figure 4. Ainsi, on peut aussi mesurer, lors du meulage d'une lentille, la puissance absorbée par les différents moteurs. Cette puissance est mesurée à l'étape 20 de l'ordinogramme de la figure 4, à la place ou en même temps que la mesure des temps d'usinage. On mesure la puissance consommée par les moteurs d'entraînement en rotation des meules et d'entraînement en rotation des moyens de préhension 7, 8. Cette mesure est par exemple effectuée grâce à des contrôleurs de tension et/ou de courant des moteurs d'entraînement.

A l'étape 21 de l'ordinogramme de la figure 4, on compare cette valeur de puissance mesurée à une valeur de consigne. Comme décrit ci-dessus, en fonction des résultats de la comparaison, on passe à l'étape 22 ou on repasse à l'étape 20, éventuellement après un certain temps d'attente.

La puissance consommée par les moteurs lors du meulage des lentilles permet de mesurer l'usure de la meule. En fait, lorsque la meule a perdu de son pouvoir abrasif, les forces de frottement entre la nieule et le verre meulé augmentent et le couple exercé par les moteurs croît corrélativement. On détecte ainsi l'usure de la meule.

La mesure de la puissance peut être une mesure instantanée; ce peut aussi être une mesure moyenne, correspondant au meulage d'une quantité de lentilles donnée.

On détecte ainsi l'usure de la meule.

## Revendications

1. Procédé de ravivage de meules pour une machine à meuler les lentilles ophtalmiques, comprenant une ou plusieurs meules diamantées (1, 2, 3, 4, 5), des moyens de préhension (7, 8) susceptibles de recevoir une lentille ophtalmique, ainsi que des moyens de commande, caractérisé en ce qu'il comprend une étape de détection de l'usure de la meule et en ce que le ravivage est effectué à l'aide d'un disque (9) de matière abrasive disposé sur la machine à meuler à la place d'une lentille dans les moyens de préhension (7, 8) desdites lentilles.

2. Procédé selon la revendication 1, caractérisé en ce qu'il comprend en outre une étape de détection automatique de la présence, la composition et/ou le profil du disque disposé dans lesdits moyens de préhension.

3. Procédé selon la revendication 1 ou 2, caractérisé en ce que l'étape de détection de l'usure de la meule consiste à mesurer le temps d'usinage d'une lentille ophtalmique.

4. Procédé selon la revendication 1 ou 2, caractérisé en ce que l'étape de détection de l'usure de la meule consiste à mesurer la puissance consommée par les moyens d'entraînement en rotation de la ou des meules diamantées (1, 2, 3, 4, 5) et/ou les moyens d'entraînement en rotation des moyens de préhension (7, 8).

5. Procédé selon l'une des revendications 1 à 4, caractérisé en ce qu'au moins la surface périphérique (13) du disque est constituée d'un matériau abrasif, et en ce que le disque présente dans sa partie centrale (14) des moyens (15) d'accouplement aux moyens de préhension (7, 8) de ladite machine.

6. Procédé selon la revendication 5, caractérisé en ce que le disque comporte en outre sur sa partie centrale des moyens d'identification constitués d'une pluralité de trous (16a, 16b, 16c).

7. Procédé selon la revendication 5 ou 6, caractérisé en ce que ledit matériau abrasif est constitué d'alumine ou de carborundum.

8. Machine à meuler les lentilles ophtalmiques comprenant une ou plusieurs meules diamantées, des moyens de préhension susceptibles de recevoir une lentille ophtalmique, ainsi que des moyens de commande pour contrôler la rotation et la position relative desdites meules et de ladite lentille, caractérisée en ce qu'elle comprend en outre des moyens de détection de la nécessité de procéder à un ravivage de ladite ou desdites meules, les dits moyens détectant la nécessité de procéder à un ravivage lorsque le temps d'usinage d'une lentille ou la puissance consommée pour le meulage d'une lentille par des moyens d'entraînement en rotation desdites meules diamantées et/ou desdits moyens de préhension (7, 8) est supérieur à une valeur de consigne.

9. Machine selon la revendication 8, caractérisé en ce qu'elle comporte en outre des moyens de détection de la présence éventuelle, de la composition et/ou du profil d'un disque de ravivage desdites meules disposé dans lesdits moyens de préhension (7, 8) à la place de ladite lentille.

10. Machine selon la revendication 9, caractérisé en ce que lesdits moyens de détection sont constitués par une cellule photoélectrique et une source de lumière.

## Claims

1. A method for re-sharpening grinding wheels for a machine for grinding ophthalmic lenses, comprising one or several diamond grinding wheels (1, 2, 3, 4, 5), gripping means (7, 8) designed to received an ophthalmic lens and control means characterized in that in comprises a step for detecting wear of the grinding wheel and in that resharpening is carried out using a disc (9) of an abrasive material fitted on the grinding machine in the place of the lens in said gripping means (7, 8) for said lenses.

2. Method according to claim 1 characterized in that it further comprises a step for automatically detecting the presence, nature and/or profile of the disc fitted in said gripping means.

3. Method according to claim 1 or 2, characterized in that the step for detecting the wear of the grinding wheel consists in measuring the time to machine an ophthalmic lens.

4. Method according to claim 1 or 2 characterized in that the step for detecting the wear of the grinding wheel consists in measuring the power consumed by the means for driving the diamond grinding wheel or wheels (1, 2, 3, 4, 5) in rotation and /or the means for driving the gripping means (7, 8) in rotation.

5. The method according to one of claims 1 to 4 characterized in that at least the peripheral surface (13) of the disc is constituted by an abrasive material, and in that the disc includes in its central portion (14) means (15) for providing coupling to the said gripping means (7, 8) of said machine.

6. The method according to claim 5, characterized in that the disc further comprises, at it central portion, identification means consisting of a plurality of holes (16a, 16b, 16c).

7. The method according to claim 5 or 6, characterized in that said abrasive material consists of alumina or carborundum.

8. A machine for grinding ophthalmic lenses comprising one or several diamonds grinding wheels, gripping means designed to receive an ophthalmic lens and control means for controlling the rotation and the relative position of said grinding wheels and said lens, characterized in that it further comprises means for detecting the need to proceed with resharpening of said grinding wheel or wheels, said means detecting the need to proceed with resharpening when the time needed to machine the lens or the power consumed by the means for driving said grinding wheel and/or said gripping means (7, 8) in rotation exceeds a target value.

9. The machine according to claim 8, characterized in that it further comprises means for detecting the possible presence, composition and/or profile of the disc for re-sharpening said grinding wheels disposed in said gripping means (7, 8) in the place of said lens.

10. The machine according to claim 9, characterized in that said detection means consist of a photoelectric cell and a light source.

## Patentansprüche

1. Schleifscheiben-Abrichtverfahren für eine Schleifmaschine für ophtalmologische Linsen, umfassend eine oder mehrere diamantbesetzte Schleifscheiben (1,2,3,4,5), Greifmittel (7,8) , die in der Lage sind, eine ophtalmologische Linse zu empfangen, sowie Steuermittel, gekennzeichnet dadurch, daß das Verfahren einen Schritt zum Nachweis der Schleifscheibenabnutzung umfaßt, und daß das Abrichten mit Hilfe einer Scheibe (9) aus abrasivem Material, die auf der Schleifmaschine anstelle der ophtalmologische Linsen in den Greifmitteln (7,8) für die ophtalmologische Linsen angordnet ist, durchgeführt wird.

2. Verfahren gemäß Anspruch 1, gekennzeichnet dadurch, daß er zusätzlich einen Schritt zum automatischen Nachweis der Anwesenheit, der Zusammensetzung und/oder des Profils der in den Greifmitteln befindlichen Scheibe umfaßt.

3. Verfahren gemäß Anspruch 1 oder 2, gekennzeichnet dadurch, daß der Schritt zum Nachweis der Schleifscheibenabnutzung darin besteht, die Bearbeitungsdauer einer ophtalmologische Linse zu messen.

4. Verfahren gemäß Anspruch 1 oder 2, gekennzeichnet dadurch, daß der Schritt zum Nachweis der Schleifscheibenabnutzung darin besteht, die Leistungsaufnahme der Drehantriebsmittel der einen oder mehreren diamantbesetzten Schleifmaschinen (1,2,3,4,5) und/oder der Drehantriebsmittel der Greifmittel (7,8) zu messen.

5. Verfahren gemäß Anspruch 1 bis 4, gekennzeichnet dadurch, daß mindestens eine Umfangsfläche (13) der Scheibe aus einem abrasiven Material besteht, und dadurch, daß die Scheibe in ihrem mittigen Teil (14) Mittel (15) zur Kupplung an die Greifmittel (7,8) der Maschine aufweist.

6. Verfahren gemäß Anspruch 5, gekennzeichnet dadurch, daß die Scheibe außerdem auf ihrem mittigen Teil Identifizierungsmittel, bestehend aus einer Mehrzahl Löcher (16a, 16b, 16c) aufweist.

7. Verfahren gemäß Anspruch 5 oder 6, gekennzeichnet dadurch, daß das abrasive Material Aluminiumoxid oder Karborund ist.

8. Schleifmaschine für ophtalmische Linsen, umfassend eine oder mehrere diamantbesetzte Schleifscheiben, Greifmittel, die in der Lage sind, eine ophtalmologische Linse zu empfangen, sowie Steuermittel zur Regelung der Drehung und der relativen Lage der Schleifscheiben und der Linse, gekennzeichnet dadurch, daß sie darüber hinaus Mittel zum Nachweis der Notwendigkeit einer Abrichtung der einen oder mehreren Schleifscheiben umfaßt, wobei die Mittel die notwendige Abrichtung der einen oder mehreren Schleifscheiben nachweisen, wenn die Bearbeitungsdauer einer ophtalmologischen Linse oder der für das Schleifen der Linse von den Drehantriebsmitteln der diamantbesetzten Schleifmaschinen und/oder der Drehantriebsmittel der Greifmittel (7,8) aufgenommenen Leistung einen bestimmten Nominalwert übersteigt.

9. Schleifmaschine gemäß Anspruch 8, gekennzeichnet dadurch, daß sie darüber hinaus Mittel zum Nachweis einer möglichen Anwesenheit, der Zusammensetzung und/oder des Profils einer anstelle der ophtalmologischen Linse in den Greifmitteln (7,8) befindlichen Abrichtscheibe für die Schleifscheiben.

10. Maschine gemäß Anspruch 9, gekennzeichnet dadurch, daß die Nachweismittel aus einer photoelektrischen Zelle und einer Lichtquelle bestehen.
